# EUROPÄISCHE PATENTSCHRIFT

(11) **EP 1 516 526 B1**
(45) Veröffentlichungstag und Bekanntmachung des Hinweises auf die Patenterteilung: **20.12.2006**
(21) Anmeldenummer: 04104446.2
(22) Anmeldetag: 15.09.2004
(51) Int. Cl.: A01F 15/08

(54) **Ballenpresse**
Baller
Presse à balles

(30) Priorität: 21.04.2004 DE 102004019286; 17.09.2003 US 665218
(43) Veröffentlichungstag der Anmeldung: 23.03.2005
(73) Patentinhaber: DEERE & COMPANY, Moline, Illinois 61265-8098 (US)
(72) Erfinder: Hel, Sébastien, 70100, Ancier (FR); Roth, Darin Ledru, Ottumwa, IA Iowa 52501 (US)
(74) Vertreter: Magin, Ludwig Bernhard

(56) Entgegenhaltungen:
- EP-A- 0 223 351
- EP-A- 0 655 190
- DE-A- 4 312 991

## Beschreibung

Die Erfindung betrifft eine Ballenpresse mit einem quaderförmigen Pressraum, in dem ein Presskolben beweglich aufgenommen wird, und mit einem Zufuhrkanal mit einer Zufuhreinrichtung zur Verdichtung von Gut in dem Zufuhrkanal und zum Einbringen des verdichteten Ernteguts in den Pressraum.

Die EP-A1-0 223 351 zeigt eine Ballenpresse mit einem durch zwei vertikal beabstandete Schubstangen in einem Pressraum hin und her bewegbaren Presskolben, welcher mit den Schubstangen über Scherbeanspruchungssensoren aufweisende Kolbenbolzen verbunden ist. Darüber hinaus weist die gezeigte Ballenpresse eine Einrichtung auf, welche einen durch eine entsprechende Einrichtung erzeugten Pressraumdruck aufgrund der durch die Scherbeanspruchssensoren ermittelten Werte einstellt.

Das der Erfindung zugrunde liegende Problem wird darin gesehen, dass die durch derartige Ballenpressen gebildeten Ballen häufig keine optimale Homogenität aufweisen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Ballenpresse mit einem quaderförmigen Pressraum, in dem ein Presskolben beweglich aufgenommen wird, und mit einem Zufuhrkanal mit einer Zufuhreinrichtung zur Verdichtung von Gut in dem Zufuhrkanal und zum Einbringen des verdichteten Ernteguts in den Pressraum zur Verfügung gestellt, welche eine Erzeugung von homogenen Ballen, insbesondere von quaderförmigen Großballen, ermöglicht. Dies wird dadurch erreicht, dass eine Sensoreinrichtung vorgesehen ist, welche wenigstens einen Wert ermitteln kann, der die vertikale Verteilung des Gutes in dem Pressraum bzw. eine Gutverteilung bezogen auf die Höhe des Pressraums repräsentiert. Eine derartige Ballenpresse kann Ballen herstellen, welche auch in vertikaler Richtung homogen sind bzw. eine zumindest im Wesentlichen einheitliche Dichte aufweisen, da die Sensoreinrichtung wenigstens einen die vertikale Gutverteilung bzw. die Ballendichte repräsentierenden Wert ermittelt, aufgrund dessen eine entsprechende Einstellung der Ballenpresse bzw. von Baugruppen der Ballenpresse oder auch eines Zugfahrzeugs etc. erfolgen kann. Bei einer derartigen Ballenpresse kann es sich um eine industriell eingesetzte Ballenpresse zur Herstellung quaderförmiger Ballen, beispielsweise aus Papier, Textilien, Abfällen oder jedem anderen geeigneten Material handeln. Vorzugsweise ist die Ballenpresse aber eine landwirtschaftliche Ballenpresse, insbesondere zur Erzeugung quaderförmiger Großballen, welche sowohl an ein Zugfahrzeug anhängbar als auch selbstfahrend ausgebildet sein kann.

Weist die Sensoreinrichtung aber wenigstens zwei Sensoren auf, so kann jeder dieser Sensoren jeweils einen Wert ermitteln, wobei die Differenz zwischen den Sensorwerten einen Indikator der Gutverteilung darstellt. Es ist aber auch denkbar, mehrere Sensoren vorzusehen, wenn beispielsweise die Gutverteilung detailliert dargestellt werden soll. Die Sensoreinrichtung kann aber auch nur einen Sensor aufweisen, welcher beispielsweise eine vertikale Druckverteilung auf den Presskolben ermittelt, wobei ein Indikator auch durch ein Vorsehen wenigstens eines Sensors ermittelt werden kann, welcher geeignet ist ein auftretendes Moment, beispielsweise in dem Presskolben und/oder auch in einem bzw. in mehreren mit diesem zusammenwirkenden Führungsmittel(n) oder auch in einem Antrieb des Presskolbens, zu ermitteln. Ein derartiges durch einen geeigneten Sensor ermitteltes Moment erlaubt Rückschlüsse auf eine insbesondere vertikale Verteilung des Erntegutes in dem Pressraum.

Ermitteln die Sensoren im Wesentlichen punktuelle Werte, so ergibt sich eine die Gutverteilung repräsentierende Differenz, wenn die Sensoren zumindest vertikal beabstandet sind. Darüber hinaus kann aber auch ein waagrechter Abstand vorgesehen sein, um auch eine Gutverteilung bezogen auf die Breite der Ballenpresse zu ermitteln.

Ist die Sensoreinrichtung bzw. sind die Sensoren in einem dem Presskolben zugewandten Bereich des Pressraums angeordnet, so wird die Gutverteilung in dem Bereich ermittelt, der zuletzt mit Gut beschickt wurde, so dass der ermittelte Wert den Ist-Zustand zeitnah wiedergibt. Die Sensoreinrichtung bzw. die Sensoren der Sensoreinrichtung kann/können hierzu beispielsweise in dem Pressraum bzw. an Wänden desselben vorgesehen sein. Die Sensoreinrichtungen bzw. der Sensor/die Sensoren kann/können aber auch an dem Presskolben selbst vorgesehen sein bzw. direkt oder indirekt mit diesem zusammenwirken. Auch diese Anordnung vermittelt einen zeitnahen Wert für den Ist-Zustand der Maschine.

Der Sensor bzw. wenigstens einer der Sensoren oder auch zwei oder mehrere der Sensoren können als Drucksensoren ausgebildet sein. Dieser Drucksensor bzw. diese Drucksensoren können beispielsweise an einer Wand bzw. an zwei oder mehr Wänden des Pressraums bzw. auch an der Oberseite und/oder Unterseite des Pressraums vorgesehen sein. In einfacher Weise kann der Drucksensor aber an dem Presskolben bzw. an einer dem Pressgut zugewandten Seite des Presskolbens vorgesehen sein, so dass er direkt mit dem durch den Presskolben verdichteten Gut zusammenwirkt. Der Sensor bzw. wenigstens einer der Sensoren oder auch zwei oder mehrere der Sensoren können auch als Längensensoren ausgebildet sein. Derartige Längensensoren können beispielsweise in dem Pressraum bzw. an einer Wand des Pressraums vorgesehen sein und eine Bewegung des Gutes mit Bezug auf den Pressraum bzw. die Wand/Wände bestimmen. Hierzu können beispielsweise bekannte Sternradeinrichtungen verwendet werden. Es ist aber auch die Verwendung anderer mechanischer oder optischer Sensoren oder auch jedes anderen geeigneten Sensors möglich.

Der Sensor kann direkt bzw. indirekt mit dem Presskolben zusammenwirken, indem er an dem Presskolben selbst und/oder seinem Antrieb und/oder einem bzw. mehreren Führungsmittel(n), welche(s) beispielsweise den Presskolben mit Bezug auf den Pressraum führt, und/oder an geeigneten Befestigungsmittel(n) vorgesehen ist, diese bildet und/oder eine(n) Bestandteil derselben darstellt. Ein derartiges Befestigungsmittel kann den Presskolben beispielsweise mit einem den Presskolben antreibenden bzw. eine Verbindung mit einem Antrieb herstellenden Gestänge, beispielsweise in der Art einer Schubstange/eines Lenkers bzw. eine(n) derartige umfassend, verbinden.

Ein derartiger Sensor kann beispielsweise in der Art eines Kraftmessbolzens, der zwei oder mehr Bauteile miteinander verbindet und die an der jeweiligen Verbindungsstelle auftretenden Kräfte bzw. Belastungen ermittelt und/oder eines Momentsensors ausgebildet sein, welcher ein auf ein entsprechendes Bauteil direkt oder indirekt ausgeübtes Moment ermittelt. Ist der Sensor beispielsweise an dem Presskolben vorgesehen, so kann er den Presskolben beispielsweise mit einem Gestänge, einem Lenker bzw. einer Schubstange verbinden und vorzugsweise die an dieser Stelle auftretenden (insbesondere Scher-) Belastungen auf die Verbindung während eines Verdichtungshubes des Presskolbens ermitteln. Weist hingegen oder darüber hinaus ein Führungsmittel einen Sensor auf, so kann dieser beispielsweise eine (Scher-) Belastung oder auch ein auf dieses Führungsmittel wirkendes Moment bestimmen.

Der Sensor bzw. die Sensoren kann/können aber auch in der Art von Dehnungsmessstreifen ausgebildet sein bzw. solche aufweisen. Ein derartiger Dehnungsmessstreifen kann beispielsweise an dem Presskolben selbst oder auch an einem den Presskolben mit einem Antrieb verbindenden Gestänge, einem Lenker bzw. einer Schubstange oder jedem anderen Bauteil vorgesehen sein, welches geeignet ist, eine die vertikale Verteilung des Gutes in dem Pressraum repräsentierende Belastung zu erfahren.
Es ist denkbar, unterschiedliche Typen von Sensoren zu kombinieren. Vorzugsweise sind aber gleichartige Sensoren vorgesehen, so dass die Sensoreinrichtung wenigstens eine Belastungs-, Kraft-, Druck- bzw. Längendifferenz und/oder auch ein Moment bzw. eine Momentverteilung ermittelt, welche(s) die Verteilung des Gutes in dem Pressraum direkt oder indirekt repräsentiert.

Es kann vorgesehen sein, dass die Zufuhreinrichtung mittels eines Zufuhrmittels, beispielsweise eines rechenartigen Elements sowohl das Gut vorzugsweise in einer Vorpresskammer bzw. einen Zufuhrkanal vorverdichtet als auch in den eigentlichen Pressraum einbringt. Üblicherweise weist eine derartige Zufuhreinrichtung aber eine Verdichtergabel, welche das Gut vorzugsweise in dem Zufuhrkanal vorverdichtet, und eine Ladegabel, welche das vorverdichtete Gut in den eigentlichen Pressraum einbringt, auf. Eine derartige Ausführung ermöglicht, insbesondere bei einer unabhängigen Steuerung der beiden Gabeln, eine Beeinflussung der Verdichtung des Gutes in dem Zufuhrkanal in Abhängigkeit von dem durch die Sensoreinrichtung ermittelten Wert. Dies kann beispielsweise in der Art geschehen, dass das Gut in dem Zufuhrkanal in einem Bereich stärker verdichtet wird als in einem weiteren Bereich, wenn die Sensoreinrichtung in dem Bereich des Pressraums in den dieser erste Bereich bzw. die dort angeordnete Ladung durch die Ladegabel eingebracht werden wird, eine zu geringe Dichte bzw. Gutverteilung ermittelt hat. Zur Ausbildung einer hierfür geeigneten Ballenpresse als auch für ein Verfahren zum Betrieb einer derartigen Ballenpresse wird auf die deutsche Patentanmeldung mit dem Aktenzeichen 103 43 386.4 und dem Anmeldetag 19.09.2003 der Anmelderin mit dem Titel "Ballenpresse und Verfahren" verwiesen, welche hiermit durch Bezugnahme vollständig in die vorliegende Anmeldung einbezogen wird.

Es kann vorgesehen sein, dass der Wert einer Bedienungsperson mittels einer Anzeigeeinrichtung beispielsweise einem an der Ballenpresse oder einem Zugfahrzeug vorgesehenen Display angezeigt oder auch anderweitig aufgezeichnet wird, um eine Einstellung der Ballenpresse und/oder eine Auswertung im Anschluss an einen Arbeitszyklus o.ä. zu ermöglichen. Eine direkte Einflussnahme bzw. eine Steuerung der Ballenpresse in Abhängigkeit von dem Wert wird aber dadurch möglich, dass der Wert durch eine vorzugsweise elektrische oder elektronische Steuereinrichtung, welche an der Ballenpresse oder auch einem mit der Ballenpresse verbundenen bzw. verbindbaren Zugfahrzeug vorgesehen ist, aufgenommen bzw. verarbeitet wird.

Es kann vorgesehen sein, dass die Steuereinrichtung Funktionen der Ballenpresse wie auch des Zugfahrzeugs, beispielsweise dessen Fahrgeschwindigkeit oder -richtung, steuert bzw. regelt. Insbesondere ist es möglich, dass die Steuereinrichtung die Zufuhreinrichtung bzw. eine Bewegung der Ladegabel und/oder der Verdichtergabel in Abhängigkeit von dem Wert steuert oder regelt. Hierfür wird wiederum auf die o.g. deutsche Anmeldung mit dem Aktenzeichen 103 43 386.4 Bezug genommen, welche eine geeignete Ballenpresse und ein entsprechendes Verfahren zum Betrieb einer solchen Ballenpresse zeigt.

Es ist denkbar, den Pressraum bzw. eine Ballenpresseinrichtung in/an dem Pressraum, eine Fahrgeschwindigkeit der Ballenpresse oder eines entsprechenden Zugfahrzeugs, die Wirkung des Presskolbens oder andere geeignete Funktionen der Ballenpresse oder des Zugfahrzeugs in Abhängigkeit von dem Wert zu beeinflussen. Wird allerdings der Volumeninhalt des Zufuhrkanals bzw. das Volumen des durch die Ladegabel in den Pressraum einzubringenden vorverdichteten Pressgutes in Abhängigkeit von dem Wert verändert bzw. eingestellt, so kann auf diese Weise eine ungleichmäßige Gutverteilung insbesondere in Bezug auf die Höhe der Ballenpresse ausgeglichen werden. Es ist denkbar, dass eine derartige Einstellung des Zufuhrkanals bzw. des Volumens durch eine Bedienungsperson in Abhängigkeit von einer Anzeige des Wertes oder einer Wertedifferenz eines Werteverlaufs vorgenommen wird. Eine automatische und somit schnelle Einstellung wird möglich, wenn diese durch die elektrische bzw. elektronische Steuereinrichtung vorgenommene wird. Insbesondere bei der Verwendung einer derartigen Steuereinrichtung aber auch bei einer durch eine Bedienungsperson vorgenommen Steuerung kann eine derartige Einstellung vorgenommen werden, dass sich der durch die Zufuhreinrichtung bzw. den Sensor/die Sensoren ermittelte Wert an einen vorgegebenen bzw. vorgebbaren Sollwert annähert. Ein derartiger Sollwert kann fest eingestellt sein oder auch abhängig von dem zu pressenden Material, den Umgebungsbedingungen, Anforderungen etc. vorgewählt oder auch automatisch bestimmt werden. Die Materialmenge bzw. Dichte in dem Zufuhrkanal kann durch eine Einstellung oder Beeinflussung eines Mittels zur Ermittlung der Pressgutdichte in dem Zufuhrkanal erfolgen. Ein derartiges Mittel kann in bekannter Art und Weise beispielsweise als eine federbelastete Klappe oder ein Rechen, welche(r) einen Bereich der Wand des Zufuhrkanals bildet oder in diesen hineinragt, ausgeführt sein, dessen Wirkung dadurch beeinflusst werden kann, dass die Wirkung der Feder oder eines anderen Federmittels oder die Stellung des Mittels mit Bezug auf den Zufuhrkanal angepasst werden kann oder auch die von dem Mittel gelieferten Werte durch die Steuereinrichtung geeignet verarbeitet werden bzw. eine geeignete Ansteuerung der Zufuhreinrichtung erfolgt.

Es kann auch vorgesehen sein, dass der Zufuhrkanal wenigstens eine bewegliche vorzugsweise verschwenkbare Wand aufweist. Durch ein Verschwenken bzw. Verstellen der Wand kann das Volumen des Zufuhrkanals beeinflusst werden, in dem es bereits in einem Einlass- oder in einem Endbereich vergrößert oder verkleinert wird. Es ist auch denkbar, die Wand um einen Mittenbereich verschwenkbar vorzusehen, so dass durch ein Verschwenken ein erster Bereich vergrößert und ein zweiter Bereich verkleinert wird, wodurch gezielt auf eine durch die Sensoreinrichtung ermittelte Wertedifferenz eingegangen werden kann.

Das Volumen des Zufuhrkanals bzw. insbesondere das Volumen der durch die Ladegabel in den Pressraum einzubringenden Gutmenge bzw. -portion kann dadurch beeinflusst werden, dass die Eintrittsposition der Ladegabel in den Zufuhrkanal bezogen auf dessen Längserstreckung veränderbar ist. So kann vorgesehen sein, dass die Eintrittsposition der Ladegabel für jeden Ladehub individuell bestimmt werden kann oder dass eine zyklische Verstellung der Ladegabel vorgenommen wird, beispielsweise auch in Abhängigkeit von einem aus mehreren Werten gebildeten Durchschnittswert. Wird die Ladegabel beispielsweise an einer Stelle in den Zufuhrkanal eingebracht, die bezogen auf eine Referenzposition weiter in Richtung des Guteinlasses liegt, wird mit dem nächsten Ladehub eine geringere Menge an Pressgut bzw. eine kleinere Pressgutportion in den Pressraum eingebracht. Umgekehrt stopft die Ladegabel eine größere Menge an Pressgut in den Pressraum, wenn sie bezogen auf die Referenzposition in einer dem Guteinlass abgelegeneren Position in den Zufuhrkanal eingebracht wird.

Es kann stattdessen oder zusätzlich auch vorgesehen sein, dass die Ladegabel wenigstens in einer Stellung gehalten werden kann, in der sie den Guteinlass zumindest im Wesentlichen verschließt und/oder in der sie einen Gutstrom in Richtung des Guteinlasses des Pressraums unterbindet. Auf diese Weise kann das Volumen des Zufuhrkanals durch die Ladegabel bestimmt werden, wodurch die Gutmenge in dem Zufuhrkanal und/oder die Pressdichte und/oder die Material- bzw. Dichteverteilung des Gutes in dem Zufuhrkanal bestimmt bzw. gesteuert werden kann. Die Ladegabel kann hierbei als alleiniger Verschluss des Guteinlasses vorgesehen sein. Es kann aber auch zusätzlich zu oder unabhängig von der Ladegabel eine Rückhalteeinrichtung, beispielsweise in der Art einer bekannten, den Guteinlass selektiv verschließenden Rückhaltegabel, vorgesehen sein.

Es kann vorgesehen sein, dass die Ladegabel nur an vorbestimmten Positionen in diese Stellung gebracht werden kann. Um eine Einstellung des Zufuhrkanals bzw. des Gutvolumens, der Gutdichte- oder verteilung in dem Zufuhrkanal zu ermöglichen, kann die Position bezogen auf die Längserstreckung des Zufuhrkanals veränderbar bzw. einstellbar sein. Die Ladegabel kann beispielsweise direkt an den Guteinlass angrenzend und an einer oder mehreren von dem Guteinlass weiter oder weniger weit beabstandeten Positionen in den Zufuhrkanal eingebracht werden.

Die Position und/oder der Ladegabel kann durch mechanische Mittel, wie Gestänge, Hebel, Kurbeltriebe etc. oder auch durch hydraulische Mittel, wie Hydraulikmotoren, oder andere geeignete Mittel oder Einrichtungen bestimmt bzw. eingestellt werden. Um eine möglichst genaue Einstellung vornehmen zu können, kann wenigstens ein weiterer Sensor vorgesehen sein, der die Position bzw. die Stellung der Ladegabel ermittelt und vorzugsweise an die Steuereinrichtung liefert.

In der Zeichnung sind nachfolgend zwei näher beschriebene Ausführungsbeispiele der Erfindung dargestellt. Es zeigt:
- Fig. 1: eine erfindungsgemäße Ballenpresse in Seitenansicht und schematischer Darstellung,
- Fig. 2 - 5: vergrößerte Ansichten eines Zufuhrkanals der Ballenpresse mit einer Ladegabel in unterschiedlichen Stellungen und
- Fig. 6: eine alternativ gestaltete erfindungsgemäße Ballenpresse.

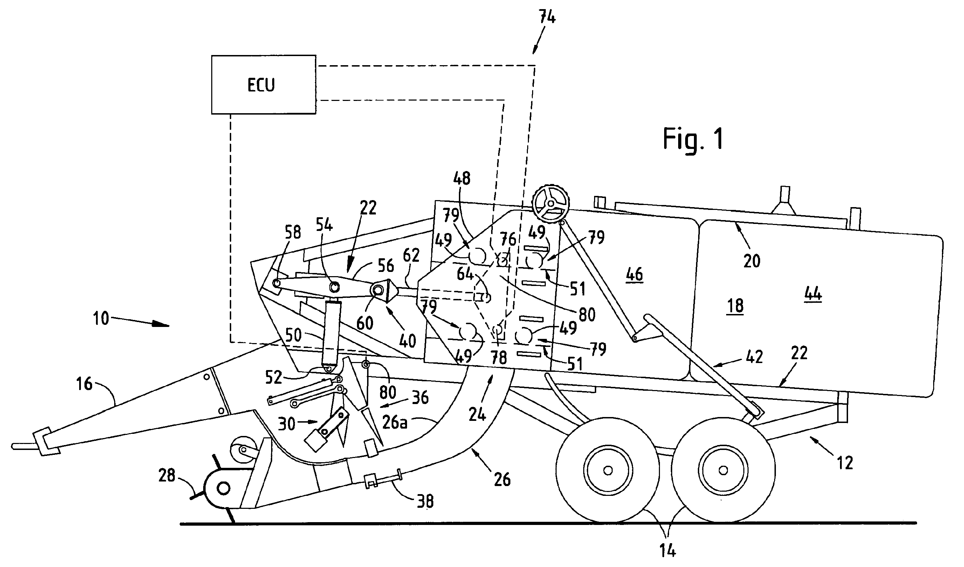

In Figur 1 ist eine Ballenpresse 10 in der Art einer Großballenpresse zum Herstellen quaderförmiger Ballen gezeigt, die einen Rahmen 12 aufweist, der auf Bodenstützrädern 14 in Tandemanordnung abgestützt ist. An den Rahmen 12 ist eine Deichsel 16 angeschlossen, welche sich von diesem aus nach vorn erstreckt und so ausgebildet ist, dass sie an ein Zugfahrzeug, wie einen nicht gezeigten Ackerschlepper, angeschlossen werden kann, der mit einer Zapfwelle ausgerüstet ist, um Leistung zum Antreiben verschiedener angetriebener Komponenten der Ballenpresse 10 zu liefern. Ein Pressraum 18 oder eine Kammer von rechteckförmigem Querschnitt wird teilweise von einem Gehäuseoberteil 20 und einem Gehäuseunterteil 22 gebildet, wobei der Gehäuseunterteil 22 mit einem Guteinlass 24 versehen ist, an den ein gekrümmter Zufuhrkanal 26 angeschlossen ist, der als ein Vorpressraum dient, wie dies nachfolgend beschrieben wird. Eine Aufnahmevorrichtung 28 in der Art einer Pick-up und mit einer zur Mitte fördernden Schnecke ist vor dem Zufuhrkanal 26 angeordnet, um ein Schwad von Erntegut vom Boden aufzuheben und es an eine Verdichtergabel 30 abzugeben, die dazu dient, Erntegut in dem Zufuhrkanal 26 zu verdichten, bis sich eine Ladung von vorgewählter Dichte in dem Zufuhrkanal 26 angesammelt hat und mittels eines Ladegabelzusammenbaus 36 über den Guteinlass 24 in den Pressraum 18 hineingestopft wird. An einer vorderen unteren Stelle des Zufuhrkanals 26 ist eine federbelastete Klappe bzw. ein Mittel 38 schwenkbar montiert, das in Abhängigkeit von sich in dem Zufuhrkanal 26 befindlichem Erntegut schwenkt, und anzeigt, dass eine gewünschte Pressgutdichte in dem Zufuhrkanal 26 erreicht ist, um die Bestromung eines elektrischen Steuerkreislaufs (nicht gezeigt) zu bewirken, der entsprechende Antriebsverbindungen herstellt, die den Ladegabelzusammenbau 36 derart aktiviert, dass er die Ladung des Ernteguts in den Pressraum 18 bewegen kann. Auf die Funktion des Ladegabelzusammenbaus 36 wird im Folgenden noch genauer eingegangen.

Wenn die Ladung des Ernteguts in den Pressraum 18 eingebracht wurde, wird ein Kolbenmechanismus 40, der vor dem Rahmen 12 angeordnet ist, in einer gesteuerten Reihenfolge nach dem Ladegabelzusammenbau 36 betätigt, um das Erntegut nach hinten in den Pressraum 18 zu bewegen, wo es in einem Stapel verdichtet wird, wie dies im Stand der Technik gut bekannt ist.

Nachdem der Stapel von verdichtetem Material eine vorgewählte Länge erreicht hat, wird ein Nadelzusammenbau 42 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 44 zu bilden, der zum Entladen fertig ist, was dann geschieht, wenn er von einem Ballenteil 46 aus dem rückwärtigen Endbereich des Pressraums 18 herausgedrückt wird, wenn er in seiner Länge zunimmt, weil neue Ladungen von Erntegut in den Pressraum 18 gestopft werden.

Mit Bezug auf die Einzelheiten des Kolbenmechanismus 40 ist zu erkennen, dass letzterer einen Presskolben 48 enthält, der für eine hin- und hergehende Bewegung in dem Pressraum 18 zwischen einer zurückgezogenen Stellung vor dem Guteinlass 24 und einer ausgefahrenen Stellung über dem Guteinlass 24 (sh. Figur 1) angeordnet ist. Diese Bewegung des Presskolbens 48 hat zum Ergebnis, dass Ladungen von Erntegut, die aus dem Zufuhrkanal 26 in den Pressraum 18 eingeführt werden, gegen einen Stapel von Erntegut verdichtet werden, was einen teilweise gebildeten Ballenteil 46 und/oder den kompletten Ballen 44 einschließt.

Der Presskolben 48 ist mit mehreren drehbaren Führungsmitteln 49 versehen, welche mit entsprechenden in dem Pressraum 18 vorgesehenen Führungen 51, die hier nur andeutungsweise dargestellt sind, zusammenwirken, um den Presskolben 48 in dem Pressraum 18 zu führen und um so eine gleichmäßige und verschleißarme Bewegung des Presskolbens 48 zu begünstigen. Vorliegend sind exemplarisch Führungsmittel 49 andeutungsweise dargestellt, welche in der Art von Laufrollen ausgebildet sind und sich quer zu der Bewegungsrichtung des Presskolbens 48 erstrecken. Es kann aber auch eine geringere oder größere Anzahl an Führungsmitteln 49 vorgesehen sein, wobei diese auch in der Art von Rollen- oder Kugel oder auch von Gleitlagern oder anderer geeigneter Mittel ausgebildet sein können. Die Führungsmittel 49 können den Presskolben 48 zusätzlich oder alternativ auch quer zu seiner Bewegungsrichtung bzw. anderweitig, beispielsweise diagonal, führen. Die Führungsmittel 49 können entgegen der vorliegenden Darstellung auch in einem Mittenbereich des Presskolbens 48 und/oder in einer oder mehreren vertikal und/oder horizontal beabstandeten Reihe angeordnet sein.
Der Kolbenmechanismus 40 enthält weiterhin einen als aus- und einfahrbare Betätigungsvorrichtung ausgebildeten Antrieb 50, der hier als eine doppeltwirkende Hydraulikzylinder-Kolben-Einheit dargestellt ist, deren Zylinderende mit einem Bolzen 52 schwenkbar an den Rahmen 12 an einer Stelle oberhalb der Verdichtergabel 30 verankert ist. Das kolbenseitige Ende des Antriebs 50 ist an einer Verbindungsstelle 54, etwa mit einem Bolzen, an einer Stelle zwischen gegenüberliegenden Enden eines als Kurbelarm dienenden ersten Lenkers 56 angeschlossen, dessen vorderer Endbereich an einer Lagerstelle 58 schwenkbar an den Rahmen 12 angeschlossen ist. Ein rückwärtiger Endbereich des ersten Lenkers 56 ist in einer Lagerstelle 60, etwa mit einem Bolzen, an einen vorderen Endbereich eines zweiten als Pleuelstange funktionierenden Lenkers 62 angeschlossen, dessen rückwärtiger Endbereich in einer Lagerstelle 64 mit dem Presskolben 48 verbunden ist. Es wird hier darauf hingewiesen, dass die verbindenden Bolzen der Lagerstellen 58 und 64 entlang einer Linie von Zentren angeordnet sind, die entlang oder ungefähr entlang einer mittigen Längsachse des Pressraums 18 liegt. Dies hat zum Ergebnis, dass die Reaktionskraft des Ernteguts, das auf den Presskolben 48 wirkt, im Wesentlichen von dem Antrieb 50 genommen wird, wenn sich der erste und der zweite Lenker 56 und 62 entlang einer Linie befinden, wie dies der Fall ist, wenn sich der Presskolben 48 in seiner rückwärtigen Endstellung befindet. Es wird weiterhin darauf hingewiesen, dass die beiden Lenker 56 und 62 jeweils als ein Paar in der Querrichtung einen Abstand zueinander aufweisender Lenker ausgebildet sein könnten. Der Antrieb 50 würde dann an der Verbindungsstelle 54 (Bolzen) an einer Stelle zwischen dem Paar von Lenkern 56 angeschlossen werden, die den ersten Lenker 56 bilden. Es wird daher erkannt, dass der Presskolben 48 den Gleiter eines Gleitkurbelmechanismus bildet, der einen ersten Lenker 56 als Kurbelarm und einen zweiten Lenker 62 als Pleuelstange enthält. Obwohl sich das von den Lenkern 56 und 62 gebildete Gestänge nicht über eine Totpunktstellung hinausbewegt, könnte es als ein Kniemechanismus oder Kniegelenk bezeichnet werden. Wenn auch das bevorzugte Ausführungsbeispiel einen Antrieb 50 zeigt, der an den ersten Lenker 56 an einer Stelle zwischen gegenüberliegenden Enden des ersten Lenkers 56 angeschlossen ist, könnte des Weiteren der Antrieb an irgendeiner Stelle zwischen der Lagerstelle 58 und der Lagerstelle 64 angeschlossen werden, zum Beispiel könnte der Antrieb 50 an dem Bolzen 60 oder an einem Punkt entlang der Länge des zweiten Lenkers 62 angeschlossen werden, wobei sich der Betrieb noch in einer besseren Art als der der bekannten Vorrichtungen darstellt, bei denen die Betätigungsvorrichtung direkt an den Presskolben 48 angeschlossen ist.

Weitere Einzelheiten dieser Ballenpresse 10 sind in der EP-A2-0 940 072 beschrieben, deren Offenbarung hierin einbezogen wird. Es wird darauf hingewiesen, dass anstelle des dort beschriebenen speziellen Antriebs mit einem Hydraulikmotor ein herkömmlicher Kurbeltrieb verwendet werden könnte.

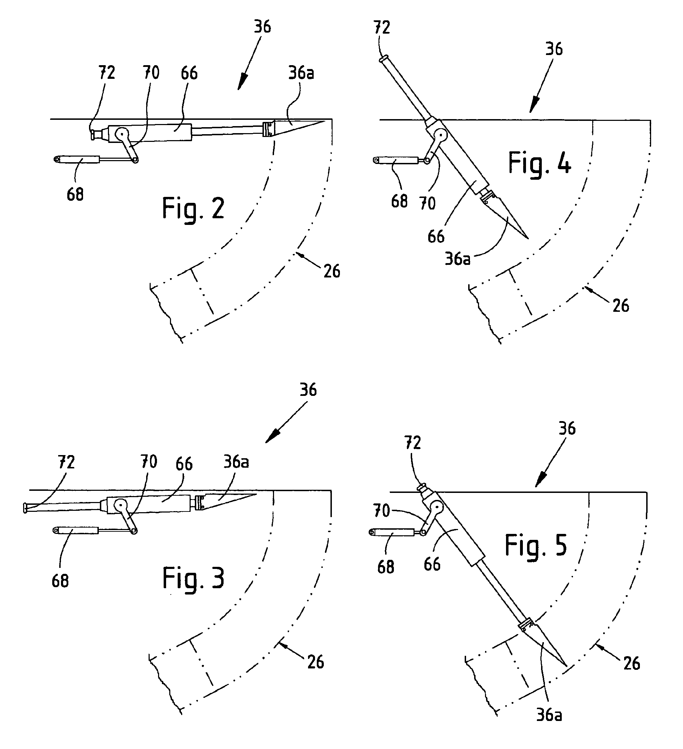

Es wird nun auf Figur 2 Bezug genommen in der der Zufuhrkanal 26 mit dem Ladegabelzusammenbau 36 in einer ersten Stellung vergrößert dargestellt ist. Der Ladegabelzusammenbau 36 weist eine Ladegabel 36a, einen ersten Hydraulikmotor bzw. einen ersten Motor 66 auf, welcher die Ladegabel 36a in Längsrichtung bewegen kann und einen zweiten Hydraulikmotor bzw. einen Motor 68 auf, welcher mit dem ersten Motor 66 über einen Hebel 70 derart verbunden ist, dass der Motor 66 durch ein Ein- bzw. Ausfahren des Motors 68 um einen Schwenkpunkt 72 verschwenkt.

Es werden nun auch die übrigen Figuren 3 bis 5 herangezogen, in denen der Ladegabelzusammenbau 36 in unterschiedlichen Stellungen gezeigt wird.

In Figur 2 befindet sich der Ladegabelzusammenbau 36 in seiner Ausgangsstellung. Der zweite Motor 68 ist ausgefahren, wodurch der erste Motor 66 durch den Hebel 70 in einer Stellung gehalten wird, in der er etwa parallel zu dem Gehäuseunterteil 22 ausgerichtet ist. Die Ladegabel 36a ist ausgefahren und befindet sich als Verlängerung des ersten Motors 66 in einer oberen Stellung, welche zumindest annähernd parallel zu dem Gehäuseunterteil 22 ist, und ist somit vor dem Guteinlass 24 angeordnet. Da die Ladegabel 36a in dieser Stellung den Guteinlass 24 zumindest im Wesentlichen verschließt, kann durch die in den Figuren 2 - 5 nicht gezeigte Verdichtergabel 30 in den Zufuhrkanal 26 eingebrachtes Pressgut in dem Zufuhrkanal 26 verdichtet werden.

Wird durch das Mittel 38 zur Ermittlung der Pressdichte in dem Zufuhrkanal ermittelt, dass die Pressdichte einen bestimmten Wert erreicht hat, so wird durch eine Steuerung (nicht gezeigt) der Ballenpresse 10 der Motor 66 derart angesteuert, dass er seine eingefahrene Stellung einnimmt, wodurch die Ladegabel 36a aus dem Zufuhrkanal 36 herausgezogen und die Guteinlassöffnung freigegeben wird (Fig. 3).

Daraufhin wird der erste Motor 66 durch den zweiten Motor 68 in die in Fig. 4 gezeigte Stellung und die Ladegabel gemäß der Darstellung in Figur 5 in eine stromabwärts des Guteinlasses 24 gelegene Stellung verschwenkt. Hier wird der Motor 66 ausgefahren, wodurch die Ladegabel 36 wieder in den Zufuhrkanal 26 eingreift.

Der zweite Motor 68 fährt nun wiederum aus und verschwenkt den ersten Motor 66 und die Ladegabel 36a entlang einer Kurvenbahn (siehe Pfeil) entlang dem Zufuhrkanal zurück in die in Figur 2 dargestellte Ausgangsstellung, wodurch die Ladegabel 36a das in dem Zufuhrkanal 26 enthaltene Pressgut in den Pressraum 18 fördert bzw. stopft. Der Guteinlass 24 ist nun wiederum verschlossen und der nächste Vorverdichtungsvorgang kann beginnen.

Es kann auch vorgesehen sein, dass die Motoren 66, 68 die Ladegabel 36a anstatt sie bei Erreichen einer vorgegebenen Pressdichte in die in Fig. 5 gezeigte Stellung zu bringen, bei Erreichen einer vorgegebenen ersten Pressdichte oder auch nach Ablauf einer vorgegebenen Zeit bzw. einer Anzahl von Zyklen der Verdichtergabel 30 in eine zwischen der Ausgangstellung (Fig. 2) und der in Fig. 5 gezeigten Stellung in den Zufuhrkanal 26 zu bringen bzw. in einer solchen Stellung zu halten. Hierbei handelt es sich um eine eigenständige Erfindung, welche auch unabhängig von den zuvor beschriebenen Merkmalen eingesetzt werden kann. Es kann hierbei auch vorgesehen sein, dass die Ladegabel 36a entsprechend in zwei oder mehreren Stellungen in den Zufuhrkanal 26 eingebracht bzw. gehalten werden kann. Durch die Ladegabel 36a wird der Zufuhrkanal 26 derart unterteilt, dass das Pressgut durch die Verdichtergabel zuerst gegenüber der in der erste Stellung angeordneten Ladegabel und im Anschluss gegenüber der in der weiteren Stellung angeordneten Ladegabel verdichtet wird. Auf diese Weise kann über die gesamte Erstreckung des Zufuhrkanals 26 eine gleichmäßige Pressgutdichte erzielt werden, wodurch das am Ende durch die Zufuhrgabel 36a in den Pressraum 18 eingebrachte Gut eine verbesserte Homogenität aufweist und die Ballenpresse 10 einen Ballen mit verbesserter Pressdichte erzeugt.

Darüber hinaus kann vorgesehen sein, dass die Ladegabel 36a, wenn sie erneut in den Zufuhrkanal 26 eingebracht wird, durch den zweiten Motor 68 ein Stück weit entlang des Zufuhrkanals 26 in Richtung des Pressguteinlasses 24 bewegt wird, um das Pressgut weiter zu verdichten.

Es wird darauf hingewiesen, dass die vorliegende Erfindung auch an einer Ballenpresse eingesetzt werden kann, welche keinen derartigen Ladegabelzusammenbau 36 bzw. einen bekannten, beispielsweise mechanisch antreibbaren Ladegabelzusammenbau oder auch einem hydraulisch oder anderweitig antreibbaren Ladegabelzusammenbau aufweist.

Es wird nun wieder auf Figur 1 Bezug genommen, aus der hervorgeht, dass die Ballenpresse 10 eine Sensoreinrichtung 74 aufweist. Die Sensoreinrichtung 74 wiederum weist zwei in vertikaler Richtung beabstandete Sensoren 76 und 78 auf. Im vorliegenden Ausführungsbeispiel sind diese Sensoren 76, 78 als Kraftmessbolzen ausgebildet, die den Presskolben 48 mit einer Konsole 80 und diese in der Lagerstelle 64 mit dem Lenker 62 verbinden. Die Sensoren 76, 78 ermitteln Werte in der Art von Scherbelastungen bzw. allgemein der Belastungen, welche der Presskolben 48 insbesondere während eines Verdichtungshubes auf die als Verbindung zwischen dem Presskolben 48 und der den Lenker 62 mit dem Presskolben verbindenden Konsole 80 dienenden Kraftmessbolzen bzw. Sensoren 76, 78 ausübt bzw. an diese überträgt.

Die von den Sensoren 76, 78 ermittelten Werte werden an eine Steuereinrichtung (ECU) der Ballenpresse 10, welche an der Ballenpresse 10 selbst oder auch an einem nicht gezeigten Zugfahrzeug vorgesehen sein kann, übermittelt.

Die ermittelten Werte stellen Indikatoren für die Gutverteilung bzw. die Dichte des Ballenteils 46 in dem Pressraum 18 dar. Liefern beispielsweise beide Sensoren 76, 78 annähernd gleiche Werte, so ist das Gut in dem Pressraum 18 ebenfalls gleichmäßig verteilt, da es dem Presskolben 48 eine einheitliche Kraft entgegensetzt bzw. der Pressteil 46 weist eine zumindest im Wesentlichen homogene Dichte auf.

Ermittelt aber beispielsweise der obere Sensor 76 einen geringeren Wert als der untere Sensor 78, so ist dem zu entnehmen, dass sich in einem oberen Bereich des Pressraums 18 eine geringere Gutmenge befindet und der Ballenteil 46 in diesem Bereich eine geringere Dichte aufweist als in dem unteren Bereich. Im umgekehrten Fall, in dem der untere Sensor 78 einen geringeren Wert liefert als der obere Sensor 76, befindet sich in dem unteren Bereich des Pressraums 18 eine geringere Gutmenge bzw. der Ballenteil 46 weist eine geringere Dichte auf. Die Differenz der ermittelten Werte lässt somit einen Rückschluss auf die vertikale Gutverteilung in dem Pressraum 18 und somit auf die Dichte des gerade gebildeten Ballenteils 46 zu.

Alternativ oder auch zusätzlich kann vorgesehen sein, dass die Führungsmittel 49 Sensoren 79 aufweisen bzw. als solche ausgebildet sind, welche der Sensoreinrichtung 74 zuzuordnen sind bzw. Bestandteile derselben bilden. Die Sensoren 79 können in Abhängigkeit von der Anordnung der Führungsmittel 49 beispielsweise als Lastmessbolzen oder auch als Momentmesseinrichtungen oder auch in anderer geeigneter Art und Weise ausgebildet sein.

Sind die Sensoren 79 beispielsweise in der Art von Lastmessbolzen ausgeführt, so können die Sensoren 79 ihre Belastung in Bezug auf die Führungen 51 bestimmen und so wie zuvor dargestellt eine Belastungsdifferenz bzw. ein Moment ermitteln und somit eine Indikator für die vertikale Verteilung des Erntegutes in dem Pressraum 18 zur Verfügung stellen. Ist wenigstens einer der Sensoren 79 geeignet ein Moment zu ermitteln, so kann bereits mittels eines Sensors ein Moment bestimmt werden, welche Rückschlüsse auf die vertikale Verteilung des Erntegutes zulässt. Dies ist insbesondere bei einer zentralen Anordnung der Führungsmittel 4 günstig und/oder wenn diese bzw. die Sensoren 79 keinen oder nur einen geringen vertikalen Abstand aufweisen.

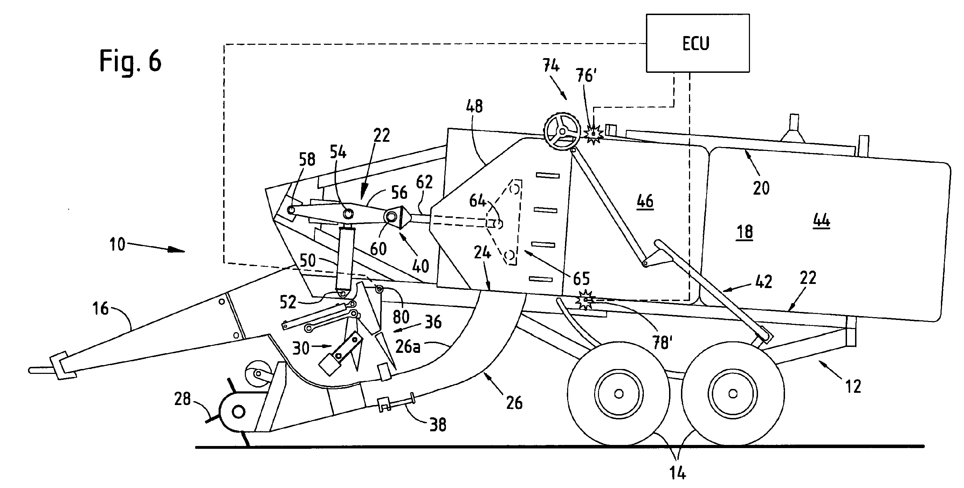

Es wird nun auf die Figur 6 Bezug genommen, in der eine weitere Ausführungsform der vorliegenden Erfindung dargestellt wird. Auch hier sind zwei in vertikaler Richtung beabstandete Sensoren 76', 78' vorgesehen. Die Sensoren 76', 78' gemäß diesem zweiten Ausführungsbeispiel sind in der Art von Sternrädern ausgebildet. Derartige Sternräder sind zur Messung bzw. Ermittlung der Ballenlänge allgemein bekannt, wobei üblicherweise ein Sternrad an einer Oberseite oder einer Unterseite des Pressraums 18 vorgesehen ist, um die Bewegung des Ballens in Längsrichtung des Pressraums 18 zu ermitteln.

Gemäß der vorliegenden Erfindung sind zwei als Sternräder ausgebildete Sensoren 76', 78' vorgesehen, so dass die Bestimmung einer Differenz der Ballenbewegung bzw. einer Längendifferenz möglich wird. Diese Differenz stellt wiederum einen Indikator für die vertikale Gutverteilung des Pressgutes in dem Pressraum 18 bzw. der Dichte des Ballenteils 46 dar.

Ermittelt aber beispielsweise der obere Sensor 76' einen geringeren Wert, d.h. dreht das obere Sternrad um einen geringeren Betrag, als der untere Sensor 78' bzw. das untere Sternrad, da sich der Ballenteil 46 in einem oberen Bereich aufgrund eines Presshubes des Presskolbens 48 bezogen auf die Längserstreckung des Pressraums 18 weniger bewegt als ein unterer Bereich, so ist dem zu entnehmen, dass sich in einem oberen Bereich des Pressraums 18 eine geringere Gutmenge befindet und der Ballenteil 46 in diesem Bereich eine geringere Dichte aufweist als in dem unteren Bereich. Im umgekehrten Fall, dass der untere Sensor 78' einen geringeren Wert liefert als der obere Sensor 76', befindet sich in dem oberen Bereich des Pressraums 18 eine geringere Gutmenge bzw. der Ballenteil 46 weist eine geringere Dichte auf. Die Differenz der ermittelten Werte lässt somit einen Rückschluss auf die vertikale Gutverteilung in dem Pressraum 18 und somit auf die Dichte des gerade gebildeten Ballenteils 46 zu.

Die durch die Sensoren 76, 78, 76', 78' und 79 ermittelten Werte werden an die Steuereinrichtung ECU übermittelt, so dass die Ballenpresse 10 von der Steuereinrichtung ECU entsprechend gesteuert werden kann. Insbesondere kann durch die Steuereinrichtung ECU die Vorverdichtung des Pressgutes in dem Zufuhrkanal 26 derart beeinflusst werden, dass eine ungleichmäßige Verteilung des Gutes bzw. eine Dichte des Ballenteils 46 in dem Pressraum 18 durch den nächsten durch die Ladegabel 36 in den Pressraum 18 eingebrachte Portion an Pressgut zumindest im Wesentlichen ausgeglichen werden kann. Dies kann erreicht werden, indem in einem entsprechenden Bereich des Zufuhrkanals 26 das Pressgut durch die Verdichtergabel 30 entsprechend stärker bzw. weniger stark verdichtet wird als in dem übrigen Zufuhrkanal 26.

Hierbei ist es hilfreich die zuvor beschriebene Ansteuerung der Ladegabel 36a vorzusehen, durch die eine Aufteilung des Zufuhrkanals 26 in Abschnitte und somit eine abschnittsweise Verdichtung des Pressgutes möglich wird, aufgrund der das Pressgut in dem Zufuhrkanal 26 unterschiedlich stark vorverdichtet werden kann.

Die Materialverteilung kann darüber hinaus bzw. abweichend hiervon auch auf andere Art und Weise beeinflusst werden. Beispielsweise kann der Volumeninhalt des Zufuhrkanals 26 verändert werden, so dass die Volumenmenge, welche durch die Ladegabel 36a durch den Guteinlass 24 in den Pressraum 18 eingebracht wird, in Abhängigkeit von dem oder den durch die Sensoreinrichtung 74 bzw. durch die Sensoren 76, 78, 76', 78', 79 ermittelten Wert(e) verändert werden kann.

Hierzu kann es beispielsweise vorgesehen sein, dass eine Wand 26a oder mehrere Wände oder Wandsegmente des Zufuhrkanals 26 bezogen auf den übrigen Zufuhrkanal 26 bewegbar vorgesehen sind. Hierzu kann die Wand 26a beispielsweise in einem ihrer Endbereiche oder in einem Mittenbereich verschwenkbar mit der Ballenpresse verbunden sein, so dass sie entweder das Volumen des Zufuhrkanals 26 als Ganzes vergrößern oder verkleinern kann oder auch einen ersten Abschnitt vergrößert und einen zweiten Abschnitt verkleinert.

Weiter kann das Volumen bzw. die Menge des durch die Ladegabel 36a in den Pressraum 18 eingebrachten vorverdichteten Gutes dadurch in Abhängigkeit von den Werten verändert werden, dass die Eintrittsposition der Ladegabel 36a zu Beginn eines Ladehubes an unterschiedlichen Positionen in den Zufuhrkanal eingebracht werden kann und so beispielsweise nur einen Teil des in dem Zufuhrkanals 26 vorhandenen Materials oder auch die gesamte zur Verfügung stehende Menge durch die Guteinlassöffnung 24 in den Pressraum 18 einbringt.

Weiter ist es möglich, wie dies bereits zuvor beschrieben wurde, dass die Ladegabel 36a eine Stellung einnehmen kann, in der sie den Guteinlass 24 zumindest im Wesentlichen verschließt. Ist die Position dieser Stellung mit Bezug auf die Längserstreckung bzw. die Gutflussrichtung in dem Zufuhrkanal 26 variabel, so kann sowohl die Menge und/oder die Verdichtung der in den Pressraum 18 einzubringenden Gutportion beeinflusst werden.

## Patentansprüche

1. Ballenpresse (10) mit einem quaderförmigen Pressraum (18), in dem ein Presskolben (48) beweglich aufgenommen wird, und mit einem Zufuhrkanal (26) mit einer Zufuhreinrichtung zur Verdichtung von Gut in dem Zufuhrkanal (26) und zum Einbringen des verdichteten Ernteguts in den Pressraum (18), **gekennzeichnet durch** eine Sensoreinrichtung (74), welche wenigstens einen Wert ermitteln kann, der die vertikale Verteilung des Gutes in dem Pressraum (18) repräsentiert.

2. Ballenpresse nach Anspruch 1, **dadurch gekennzeichnet, dass** die Sensoreinrichtung (74) wenigstens zwei Sensoren (76, 78, 76', 78') und/oder wenigstens einen Sensor (79), welcher geeignet ist ein Moment zu ermitteln, aufweist.

3. Ballenpresse nach Anspruch 2, **dadurch gekennzeichnet, dass** die Sensoren (76, 78, 76', 78') wenigstens vertikal beabstandet sind.

4. Ballenpresse nach einem oder mehreren der vorherigen Ansprüche, **dadurch gekennzeichnet, dass** die Sensoreinrichtung (74) bzw. wenigstens einer der Sensoren (76, 78, 76', 78', 79) in einem dem Presskolben (48) zugewandten Bereich des Pressraums (18) angeordnet ist und/oder dass die Sensoreinrichtung (74) bzw. wenigstens einer der Sensoren (76, 78, 76', 78', 79) an dem Presskolben (48) vorgesehen ist bzw. direkt oder indirekt mit diesem zusammenwirkt.

5. Ballenpresse nach Anspruch 4, **dadurch gekennzeichnet, dass** wenigstens einer der Sensoren (76, 78, 76', 78', 79) in der Art eines an dem Presskolben (48) und/oder in dem Pressraum vorgesehenen Drucksensors und/oder Längensensors und/oder Momentsensors ausgebildet ist.

6. Ballenpresse nach einem oder mehreren der Ansprüche 2 bis 5, **dadurch gekennzeichnet, dass** der Sensor (76, 78, 76', 78', 79) direkt oder indirekt an dem Presskolben (48) vorgesehen ist und vorzugsweise eine Belastung desselben ermittelt.

7. Ballenpresse nach einem oder mehreren der Ansprüche 2 bis 6, **dadurch gekennzeichnet, dass** der Sensor (76, 78, 76', 78', 79) in der Art eines Kraftmessbolzens und/oder eines Momentsensors ausgebildet ist.

8. Ballenpresse nach einem oder mehreren der Ansprüche 2 bis 7, **dadurch gekennzeichnet, dass** der Sensor (76, 78, 76', 78', 79) in der Art eines Dehnungsmessstreifens ausgebildet bzw. einen solchen aufweist ist.

9. Ballenpresse nach einem oder mehreren der vorherigen Ansprüche, **dadurch gekennzeichnet, dass** die Sensoreinrichtung (74) wenigstens eine Belastungs-, Kraft-, Druck- bzw. Längendifferenz und/oder ein Moment bzw. eine Momentverteilung ermittelt.

10. Ballenpresse nach einem oder mehreren der vorherigen Ansprüche, **dadurch gekennzeichnet, dass** die Zufuhreinrichtung wenigstens eine Ladegabel (36a) und/oder eine Verdichtergabel (30) aufweist.

11. Ballenpresse nach einem oder mehreren der vorherigen Ansprüche, **dadurch gekennzeichnet, dass** der Wert durch eine Steuereinrichtung (ECU) aufgenommen bzw. verarbeitet wird.

12. Ballenpresse nach Anspruch 11, **dadurch gekennzeichnet, dass** die Steuereinrichtung (ECU) wenigstens eine Funktion der Ballenpresse (10) und/oder eines mit der Ballenpresse (10) verbundenen bzw. verbindbaren Zugfahrzeugs, insbesondere die Zufuhreinrichtung bzw. eine Bewegung der Ladegabel (36a) und/oder der Verdichtergabel (30) in Abhängigkeit von dem Wert steuert oder regelt.

13. Ballenpresse nach einem oder mehreren der vorherigen Ansprüche, **dadurch gekennzeichnet, dass** der Volumeninhalt des Zufuhrkanals (26) bzw. das Volumen bzw. die Dichte des durch die Ladegabel (36a) in den Pressraum (18) einzubringenden vorverdichteten Pressgutes vorzugsweise durch die Steuereinrichtung (ECU) in Abhängigkeit von dem Wert veränderbar ist.

14. Ballenpresse nach Anspruch 13, **dadurch gekennzeichnet, dass** der Zufuhrkanal (26) wenigstens eine bewegliche vorzugsweise verschwenkbare Wand (26a) aufweist.

15. Ballenpresse nach Anspruch 13 oder 14, **dadurch gekennzeichnet, dass** eine Eintrittsposition der Ladegabel (36a) in den Zufuhrkanal (26) bezogen auf dessen Längserstreckung veränderbar ist.

16. Ballenpresse nach einem oder mehreren der Ansprüche 13 bis 15, **dadurch gekennzeichnet, dass** die Ladegabel (36a) wenigstens in einer Stellung gehalten werden kann, in der sie den Guteinlass (24) zumindest im Wesentlichen verschließt und/oder der sie einen Gutstrom in Richtung des Guteinlasses (24)unterbindet.

17. Ballenpresse nach Anspruch 16, **dadurch gekennzeichnet, dass** die Position dieser Stellung mit Bezug auf die Längserstreckung des Zufuhrkanals (26) veränderbar ist.

18. Ballenpresse nach einem oder mehreren der Ansprüche 13 bis 14, **gekennzeichnet durch** einen Sensor (80) zur Ermittlung der Position und/oder Stellung der Ladegabel (36a).

## Claims

1. A baler (10) with a compaction chamber (18) of parallelepiped form, in which a compressing ram (48) is movably received, and with a feed channel (26) with a feed device for compacting crop in the feed channel (26) and for passing the compacted crop into the compaction chamber (18), **characterized by** a sensor device (74) which can detect at least one value which represents the vertical distribution of the crop in the compaction chamber (18).

2. A baler according to claim 1, **characterized in that** the sensor device (74) comprises at least two sensors (76, 78, 76', 78') and/or at least one sensor (79) which is adapted to detect a moment.

3. A baler according to claim 2, **characterized in that** the sensors (76, 78, 76', 78') are spaced at least vertically.

4. A baler according to one or more of the preceding claims, **characterized in that** the sensor device (74) or at least one of the sensors (76, 78, 76', 78') is arranged in a region of the compaction chamber (18) facing the compressing ram (48) and/or that the sensor device (74) or at least one of the sensors (76, 78, 76', 78') is provided on the compressing piston (48) or cooperates directly or indirectly therewith.

5. A baler according to claim 4, **characterized in that** at least one of the sensors (76, 78, 76', 78') is formed in the manner of a pressure sensor and/or length sensor and/or moment sensor provided on the compressing piston (48) and/or in the compaction chamber.

6. A baler according to one or more of claims 2 to 5, **characterized in that** the sensor (76, 78, 76', 78') is provided directly or indirectly on the compressing piston (48) and preferably detects a load thereon.

7. A baler according to one or more of claims 2 to 7, **characterized in that** the sensor (76, 78, 76', 78') is formed in the manner of a force measuring pin and/or a moment sensor.

8. A baler according to one or more of claims 2 to 7, **characterized in that** the sensor (76, 78, 76', 78') is formed in the manner of a strain gauge or comprises such.

9. A baler according to one or more of the preceding claims, **characterized in that** the sensor device (74) detects at least one load, force, pressure or length difference and/or a moment or a moment distribution.

10. A baler according to one or more of the preceding claims, **characterized in that** the feed device comprises at least a loader fork (36a) and/or a compactor fork (30).

11. A baler according to one or more of claims, **characterized in that** the value is received or processed by a control device (ECU).

12. A baler according to claim 11, **characterized in that** the control device (ECU) controls or regulates at least one function of the baler (10) and/or of a towing vehicle which is or can be connected to the baler (10), especially the feed device or a movement of the loader fork (36a) and/or of the compactor fork (30), in dependence on the value.

13. A baler according to one or more of the preceding claims, **characterized in that** the volume content of the feed channel (26) or the volume or density of the precompacted bale material to be fed into the compaction chamber (18) by the loader fork (36a) can preferably be altered by the control device (ECU) in dependence on the value.

14. A baler according to claim 13, **characterized in that** the feed channel (26) has at least one movable, preferably pivoting, wall (26a).

15. A baler according to claim 13 or 14, **characterized in that** an entry position of the loader fork (36a) into the feed channel (26) in relation to its longitudinal extent can be varied.

16. A baler according to one or more of claims 13 to 15, **characterized in that** the loader fork (36a) can be retained at least on one position in which it at least substantially closes the crop inlet (24) and/or prevents a crop flow in the direction of the crop inlet (24).

17. A baler according to claim 16, **characterized in that** the position of this position relative to the longitudinal extent of the feed channel (26) can be varied.

18. A baler according to one or more of claims 13 to 14, **characterized by** a sensor (80) for detecting the position and/or setting of the loader fork (36a).

## Revendications

1. Presse à balles (10) comportant un espace de compression en forme de parallélépipède (18) dans lequel un piston de compression (48) est logé de manière mobile et comportant un canal d'amenée (26) avec un dispositif d'amenée pour le compactage de produit dans le canal d'amenée (26) et pour l'introduction du produit de récolte compacté dans l'espace de compression (18), **caractérisée par** un dispositif à capteurs (74), lequel peut déterminer au moins une valeur qui représente la répartition verticale du produit dans l'espace de compression (18).

2. Presse à balles selon la revendication 1, **caractérisée en ce que** le dispositif à capteurs (74) comporte au moins deux capteurs (76, 78, 76', 78') et/ou au moins un capteur (79), lequel est adapté à la détermination d'un couple.

3. Presse à balles selon la revendication 2, **caractérisée en ce que** les capteurs (76, 78, 76', 78') sont espacés au moins à la verticale.

4. Presse à balles selon l'une quelconque ou plusieurs des revendications précédentes, **caractérisée en ce que** le dispositif à capteurs (74) ou au moins l'un des capteurs (76, 78, 76', 78', 79) est disposé dans une zone de l'espace de compression (18) tournée vers le piston de compression (48) et/ou **en ce que** le dispositif à capteurs (74) ou au moins l'un des capteurs (76, 78, 76', 78', 79) est prévu sur le piston de compression (48) ou coopère directement ou indirectement avec celui-ci.

5. Presse à balles selon la revendication 4, **caractérisée en ce qu'**au moins l'un des capteurs (76, 78, 76', 78', 79) est réalisé sous la forme de capteur de pression et/ou de capteur de la longueur et/ou de capteur de couple prévu sur le piston de compression (48) et/ou dans l'espace de compression.

6. Presse à balles selon l'une quelconque ou plusieurs des revendications 2 à 5, **caractérisée en ce que** le capteur (76, 78, 76', 78', 79) est prévu directement ou indirectement sur le piston de compression (48) et détermine de préférence une charge de celui-ci.

7. Presse à balles selon l'une quelconque ou plusieurs des revendications 2 à 6, **caractérisée en ce que** le capteur (76, 78, 76', 78', 79) est réalisé sous la forme de boulon de mesure de la force et/ou de capteur de couple.

8. Presse à balles selon l'une quelconque ou plusieurs des revendications 2 à 7, **caractérisée en ce que** le capteur (76, 78, 76', 78', 79) est réalisé sous la forme de jauge extensométrique ou comporte une telle jauge.

9. Presse à balles selon l'une quelconque ou plusieurs des revendications précédentes, **caractérisée en ce que** le dispositif à capteurs (74) détermine au moins une différence de charge, de force, de pression ou de longueur et/ou un couple ou une répartition de couple.

10. Presse à balles selon l'une quelconque ou plusieurs des revendications précédentes, **caractérisée en ce que** le dispositif d'amenée comporte au moins une fourche de chargement (36a) et/ou une fourche de compacteur (30).

11. Presse à balles selon l'une quelconque ou plusieurs des revendications précédentes, **caractérisée en ce que** la valeur est reprise ou traitée par un dispositif de commande (ECU).

12. Presse à balles selon la revendication 11, **caractérisée en ce que** le dispositif de commande (ECU) commande ou ajuste, en fonction de la valeur, au moins une fonction de la presse à faire des balles (10) et/ou d'un véhicule de traction raccordé ou pouvant être raccordé à la presse à faire des balles (10), notamment le dispositif d'amenée ou un mouvement de la fourche de chargement (36a) et/ou de la fourche de compacteur (30).

13. Presse à balles selon l'une quelconque ou plusieurs des revendications précédentes, **caractérisée en ce que** le contenu volumique du canal d'amenée (26) ou le volume ou la densité du produit à compresser précompacté à introduire dans l'espace de compression (18) par la fourche de chargement (36a) peut être modifié en fonction de la valeur, de préférence par le dispositif de commande (ECU).

14. Presse à balles selon la revendication 13, **caractérisée en ce que** le canal d'amenée (26) comporte au moins une paroi mobile de préférence pivotante (26a).

15. Presse à balles selon la revendication 13 ou 14, **caractérisée en ce qu'**une position d'entrée de la fourche de chargement (36a) dans le canal d'amenée (26) peut être modifiée par rapport à son extension longitudinale.

16. Presse à balles selon l'une quelconque ou plusieurs des revendications 13 à 15, **caractérisée en ce que** la fourche de chargement (36a) peut être maintenue au moins dans une position dans laquelle elle ferme l'admission de produit (24) au moins pour l'essentiel et/ou elle empêche un flux de produit en direction de l'admission de produit (24).

17. Presse à balles selon la revendication 16, **caractérisée en ce que** l'emplacement de cette position peut être modifié en ce qui concerne l'extension longitudinale du canal d'amenée (26).

18. Presse à balles selon l'une quelconque ou plusieurs des revendications 13 à 14, **caractérisée par** un capteur (80) de détermination de l'emplacement et/ou de la position de la fourche de chargement (36a).
